# EUROPEAN PATENT SPECIFICATION

(11) **EP 3 087 797 B1**
(45) Date of publication and mention of the grant of the patent: **10.06.2020**
(21) Application number: 13900237.2
(22) Date of filing: 28.12.2013
(51) Int. Cl.: H04W 88/02

(54) **ELECTRONIC DEVICE WITH DISPLAY MOUNTED IN HOUSING**
ELEKTRONISCHE VORRICHTUNG MIT EINER IM GEHÄUSE MONTIERTEN ANZEIGE
DISPOSITIF ÉLECTRONIQUE AVEC AFFICHAGE MONTÉ DANS UN BOÎTIER

(43) Date of publication of application: 02.11.2016
(73) Proprietor: Intel Corporation, Santa Clara, CA 95054 (US)
(72) Inventor: FRANCIS, Mark, Portland, Oregon 97229 (US); PITALLANO, Maria, Santa Clara, California 95054 (US); PEEK, Gregory, North Plains, Oregon 97133 (US); IDSINGA, Andy, Portland, Oregon 97213 (US); PONTARELLI, Mark, Lake Oswego, Oregon 97035 (US); DILL, Katie, San Francisco, California 94107 (US); WILDE, Gordon, Lake Oswego, Oregon 97035 (US); DORENKAMP, James, Portland, Oregon 97203 (US); LI, Xiaoxi, Beijing 100028 (CN)
(74) Representative: Rummler, Felix
(86) International application number: PCT/CN2013/090812
(87) International publication number: WO 2015/096169

(56) References cited:
- CN-A- 103 309 574
- CN-U- 203 149 296
- CN-U- 203 149 296
- CN-Y- 201 146 008
- DE-U1-202012 005 766
- US-A1- 2012 234 041

## Description

### Technical Field

The present techniques relate generally to electronic devices within wearable form factors. More specifically, the present techniques relate generally to a stand-alone smart bracelet with complex curves.

### Background Art

Wearable electronic devices include smart watches, fitness trackers, connected glasses, activity trackers, and the like. Frequently, wearable electronic devices are unisex in design. Additionally, wearable electronic devices are often used by pairing the wearable electronic device to another electronic device, such as a smart phone, tablet computer, or other mobile device. In this manner, wearable electronic devices are typically unable to operate without being tethered to a primary device.

US 2012/234041 A1 describes an electronic bracelet that has a bracelet body with an inner opening for a part of a user's body and a bracelet part provided with an electronic device and connectable with the bracelet body to form the whole bracelet so that the user can see and operate the electronic device on his body part.

DE 20 2012 005766 U1 describes a bracelet including integrated components of a mobile telephone.

CN 203 149 296 U describes a watch comprising a bendable upper shell, a lower shell shaped to match the upper shell, a watchstrap fixed on both ends of the lower shell, an arc-shaped flexible display screen arranged in a cavity formed by the upper shell and the lower shell and shaped to match the upper shell, and a testing component arranged in the cavity and electrically connected with the display screen.

### Brief Description of the Drawings

Fig. 1 is a block diagram of an electronic device that may be used to implement a stand-alone smart bracelet with complex curves;
Fig. 2 is an illustration of a stand-alone smart bracelet with complex curves which may house the electronic device;
Fig. 3 is an illustration of a portion of a smart bracelet;
Fig. 4A is a top view of a bracelet;
Fig. 4B is a cross section of the bracelet; and
Fig. 5 is a process flow diagram of a method for combining a display within a form factor that includes a surface with a complex curve.

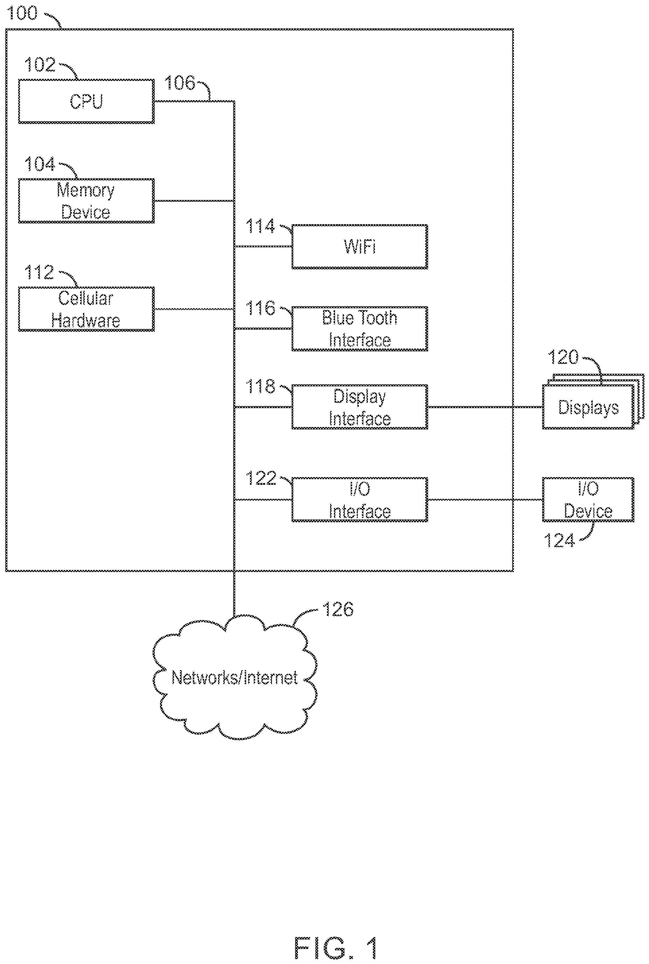

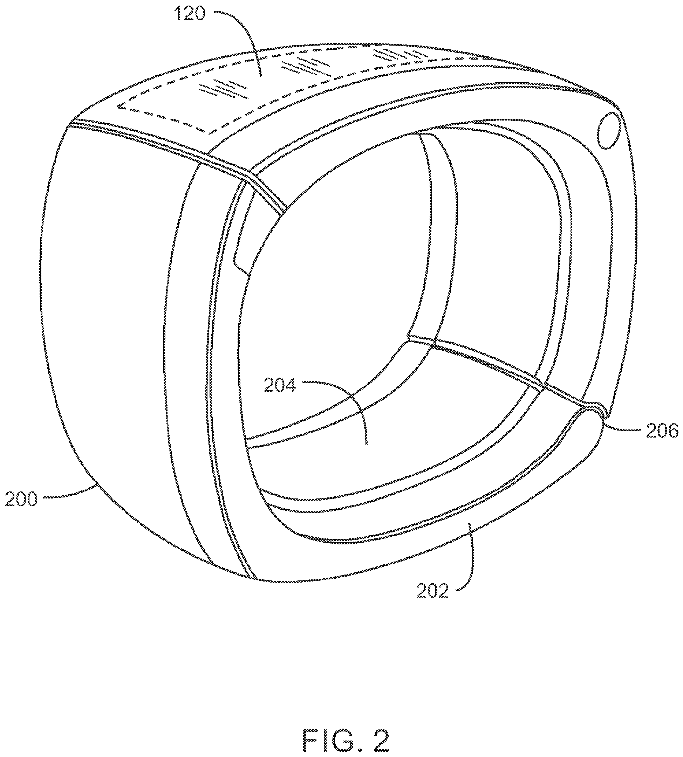

The same numbers are used throughout the disclosure and the figures to reference like components and features. Numbers in the 100 series refer to features originally found in Fig. 1; numbers in the 200 series refer to features originally found in Fig. 2; and so on.

### Description of the Embodiments

As discussed above, the vast majority of wearable electronic devices are unisex. This results in a product that can be unappealing to women that desire a decidedly fashionable product with an eye-appealing form factor. As current wearable electronic devices products come in the form factors of watches, ear pierces, glasses, or activity bands, these form factors may be too large or ill suited for use by an average female. Furthermore, current wearable electronic devices are not stand alone products. Rather, these devices are paired with a primary device in order to retrieve data.

Embodiments described herein generally relate to a stand-alone smart bracelet with a complex curve. In embodiments, the bracelet includes double contours and at least one display. The display is tilted within a double contoured housing, and the housing is a contoured thickness across the display. In a double contoured housing, the thickness across the display is held constant in one direction, while in the other direction the thickness is contoured. The stand-alone smart bracelet also includes at least one networking functionality.

In the following description and claims, the terms "coupled" and "connected," along with their derivatives, may be used. It should be understood that these terms are not intended as synonyms for each other. Rather, in particular embodiments, "connected" may be used to indicate that two or more elements are in direct physical or electrical contact with each other. "Coupled" may mean that two or more elements are in direct physical or electrical contact. However, "coupled" may also mean that two or more elements are not in direct contact with each other, but yet still co-operate or interact with each other.

Some embodiments may be implemented in one or a combination of hardware, firmware, and software. Some embodiments may also be implemented as instructions stored on a machine-readable medium, which may be read and executed by a computing platform to perform the operations described herein. A machine-readable medium may include any mechanism for storing or transmitting information in a form readable by a machine, e.g., a computer. For example, a machine-readable medium may include read only memory (ROM); random access memory (RAM); magnetic disk storage media; optical storage media; flash memory devices; or electrical, optical, acoustical or other form of propagated signals, e.g., carrier waves, infrared signals, digital signals, or the interfaces that transmit and/or receive signals, among others.

An embodiment is an implementation or example. Reference in the specification to "an embodiment," "one embodiment," "some embodiments," "various embodiments," or "other embodiments" means that a particular feature, structure, or characteristic described in connection with the embodiments is included in at least some embodiments, but not necessarily all embodiments, of the present techniques. The various appearances of "an embodiment," "one embodiment," or "some embodiments" are not necessarily all referring to the same embodiments. Elements or aspects from an embodiment can be combined with elements or aspects of another embodiment.

Not all components, features, structures, characteristics, etc. described and illustrated herein need be included in a particular embodiment or embodiments. If the specification states a component, feature, structure, or characteristic "may", "might", "can" or "could" be included, for example, that particular component, feature, structure, or characteristic is not required to be included. If the specification or claim refers to "a" or "an" element, that does not mean there is only one of the element. If the specification or claims refer to "an additional" element, that does not preclude there being more than one of the additional element.

It is to be noted that, although some embodiments have been described in reference to particular implementations, other implementations are possible according to some embodiments. Additionally, the arrangement and/or order of circuit elements or other features illustrated in the drawings and/or described herein need not be arranged in the particular way illustrated and described. Many other arrangements are possible according to some embodiments.

In each system shown in a figure, the elements in some cases may each have a same reference number or a different reference number to suggest that the elements represented could be different and/or similar. However, an element may be flexible enough to have different implementations and work with some or all of the systems shown or described herein. The various elements shown in the figures may be the same or different. Which one is referred to as a first element and which is called a second element is arbitrary.

Fig. 1 is a block diagram of an electronic device 100 that may be used to implement a stand-alone smart bracelet with a complex curve. As used herein, the term "stand-alone" may refer to the ability of the device to transmit data across a network without being tethered to another, primary device. Additionally, the term "stand-alone" may refer to the ability of the device to transmit data across a plurality of networks without being tethered to a primary device. The electronic device 100 may be enclosed within any wearable form factor. In some cases, the electronic device 100 is enclosed within a wearable form factor with a complex curve. The electronic device 100 may include a central processing unit (CPU) 102 that is configured to execute stored instructions, as well as a memory device 104 that stores instructions that are executable by the CPU 102. The CPU may be coupled to the memory device 104 by a bus 106. Although a single bus is illustrated, one or more busses may be used to connect peripherals and components with different technologies. Additionally, the CPU 102 can be a single core processor, a multi-core processor, a computing cluster, or any number of other configurations. Furthermore, the electronic device 100 may include more than one CPU 102.

The memory device 104 can include random access memory (RAM), read only memory (ROM), flash memory, or any other suitable memory systems. For example, the memory device 104 may include dynamic random access memory (DRAM). In some cases, the electronic device 100 includes an image capture mechanism. The CPU 102 may be linked through the bus 106 to cellular hardware 1 12. The cellular hardware 1 12 may be any cellular technology, for example, the 4G standard (International Mobile Telecommunications-Advanced (IMT-Advanced) Standard promulgated by the International Telecommunications Union - Radio communication Sector (ITU-R)).

In this manner, the electronic device 100 may access any network 126 without being tethered or paired to another device, where the network 126 is a cellular network. Thus, the electronic device is a stand-alone device that may be enclosed within a wearable form factor.

The CPU 102 may also be linked through the bus 106 to WiFi hardware 1 14. The WiFi hardware is hardware according to WiFi standards
(standards promulgated as Institute of Electrical and Electronics Engineers' (IEEE) 802.1 1 standards). The WiFi hardware enables the electronic device 100 to connect to the Internet using the Transmission Control Protocol and the Internet Protocol (TCP/IP), where the network 126 is the Internet. Accordingly, the device 100 can enable end-to-end connectivity with the Internet by addressing, routing, transmitting, and receiving data according to the TCP/IP protocol without the use of another device. Additionally, Bluetooth Interface 1 16 may be coupled to the CPU 102 through the bus 106. The Bluetooth Interface 1 16 is an interface according to Bluetooth networks (based on the Bluetooth standard promulgated by the Bluetooth Special Interest Group). The Bluetooth Interface 1 16 enables the electronic device 100 to be paired with other Bluetooth enabled devices through a personal area network (PAN). Accordingly, the network 126 may be a PAN. Examples of Bluetooth enabled devices include a laptop computer, desktop computer, ultrabook, tablet computer, mobile device, or server, among others.

In some cases the cellular hardware 1 12, the Wifi hardware 1 14, and the Bluetooth Interface 1 16 are implemented through various radios. Accordingly, the electronic device 100 may include one or more radios capable of transmitting and receiving signals using various suitable wireless communications techniques. Such techniques may involve communications across one or more wireless networks 126. Exemplary wireless networks include wireless local area networks (WLANs), wireless personal area networks (WPANs), wireless metropolitan area network (WMANs), cellular networks, satellite networks, or the like. In communicating across such networks, the radios may operate in accordance with one or more applicable standards in any version. In embodiments, the electronic device 100 may dynamically select a network to transmit data based on accessibility and battery power remaining. For example, if the cellular hardware 112 has low accessibility due to low signal strength of a received radio signal, the electronic device may select another networking functionality based on the lack of accessibility for the cellular hardware. Similarly, if the electronic device is low on battery power, the device can dynamically select a networking functionality that uses the least amount of power. In this manner, the electronic device can intelligently select a networking functionality.

The CPU 102 may be linked through the bus 106 to a display interface 1 18 configured to connect the electronic device 100 to a plurality of displays120. The displays 120 may include a display screen that is a built-in component of the electronic device 100. In some cases, the display device 120 may also include a computer monitor, television, or projector, among others, that is externally connected to the electronic device 100.The CPU 102 may also be connected through the bus 106 to an input/output (I/O) device interface 122 configured to connect the electronic device 100 to one or more I/O devices 124. The I/O devices 124 may include, for example, a touch screen or an accelerometer, among others. The I/O devices 120 may be built-in components of the electronic device 100.

The electronic device 100 may include a plurality of applications (apps) that can be downloaded using the network 126. The apps can be used to customize the device. For example, a user can download apps so that certain types of data and notifications can be accessed by the electronic device 100.

The block diagram of Fig. 1 is not intended to indicate that the electronic device 100 is to include all of the components shown in Fig. 1 . Further, the electronic device 100 may include any number of additional components not shown in Fig. 1 , depending on the details of the specific implementation.

Fig. 2 is an illustration of a stand-alone smart bracelet housing 200 with a complex curve that may house the electronic device 100. A display 120 is illustrated on the stand-alone smart bracelet housing 200. One display is illustrated for ease of description. However, the bracelet housing 200 may include a plurality of displays. The display may be a light-emitting diode (LED), organic light-emitting diode (OLED), flexible OLED, thin-film-transistor liquid-crystal display (TFT LCD), electronic paper, or any other flexible, thin display technology. The display 120 is illustrated using a dashed line to indicate that display 120 is below the surface of the housing 200. The housing 200 may be a single molded housing that contains the display 120 within the housing. In some cases, an outer cover may be used to cover the display 120, and the outer cover can be joined with another piece to form the housing 200. Further, the housing may include an opening beyond which the display is viewed, the display being positioned so that it does not extend through the surface with the complex curve.

In embodiments, the displays include a plurality of mini-vias. The mini-vias may be used to change the color of a "dead screen" of the bracelet. As used herein, a dead screen refers to the display when it is not in use and is to be blank. Typically, a dead screen is black in color, and blends seamlessly with a black wearable form factor. Mini-vias may enable the display to have a dead screen that is any color. In this manner, the dead screen can be adjusted to blend in with any color form factor, creating a smooth, uniform, visually uninterrupted wearable form factor surface.

A dead screen effect may also be created by tinting the plastic above the screen a similar color to the surrounding material of the bracelet. Typically, the display is a dark color that when off, combined with the tinted plastic, matches the tint of the surrounding material. Further, a third method of achieving the dead screen effect can be implemented by using a display that is transparent when off, and placing it over material that matches the color of the surrounding bracelet material.

The display 120 may be disposed underneath a surface of the housing 200. In this manner, a surface of the housing 200 will be a continuous, smooth material located atop of the display 120. The surface of the housing 200 may be curved or contoured along several axes. In some cases, the display 120 is curved or contoured along fewer axes when compared to the surface of the housing 200. Accordingly, a recess of the housing that is below the surface of the housing 200 may be formed such that the recessed area of the housing does not have the same contours as the surface of the housing. Rather, the recess of the housing below the surface of the housing 200 may have contours that match the contours of the display 120. For example, the display 120 may be able to curve along a first axis that extends along the lines that go around the wrist when the bracelet is worn. In this example, the display may not curve along a second axis that extends from the hand to the forearm when the bracelet is worn. The surface of the bracelet 200 is contoured along the first axis and the second axis. To accommodate the display 120, the recess of the housing that is below the surface of the housing 200 is formed such that the recess of the housing is contoured along the first axis and not the second axis. In other words, an outer surface of the housing 200 is contoured along the two axes, while a recess below the surface of the housing 200 is contoured along one axis. The display is then disposed in the recess of the housing below the surface of the housing 200.

In some cases, the stand-alone smart bracelet housing 200 may be coupled with an accent piece 202. The accent piece 202 can add a visual interest and distinction to the appearance of the bracelet 200. Additionally, the bracelet 200 may be coupled with an insert piece 204. The insert piece 204 may be of different sizes and textures, and may feature a pattern, graphic, or design. When the insert piece 204 is thicker, the inner diameter of the bracelet 200 is decreased. This decrease in inner diameter enables the bracelet 200 to fit smaller wrist sizes. Accordingly, the insert piece 204 enables the bracelet 200 to be adjustable in size.

A hinge may be located at reference number 206. The bracelet 200 may open and close using the hinge 206. The hinge 206 rotatably couples portions of the bracelet 200 together. In some embodiments, an accent piece is implemented in two separate pieces so that it will not interfere with the hinge operation. A clasp may be used in combination with the hinge 206 to secure portions of the bracelet 200. The clasp may be secured using magnets located within the bracelet 200. Alternatively, the clasp may be secured with a latching mechanism, or a combination of magnets and latch. The bracelet 200 may also include sensors to detect when the bracelet 200 is opened or closed. In embodiments, the opened or closed state of the bracelet is determined using the Hall effect. Specifically, a change in voltage may be detected across sensors within the bracelet 200. If the voltage indicates the bracelet is open, the bracelet may be off or in a low power state. In some cases, the bracelet is inoperable when the clasp is opened. When the bracelet is closed on the wrist of the user, a user authentication process may begin. In some cases, the user enters a passcode to access the electronic device functionality of the bracelet 200.

In some cases, the smart bracelet 200 is a designed specifically for women. The bracelet design incorporates fashion elements, and the materials, colors, textures, size and weight of the bracelet are purposefully designed to hide the technology. Moreover, the bracelet is designed to be attractive to wear even when the technology features are not desired. The smart bracelet also contains numerous areas were designers and design partners can customize the bracelet with their own colors, patterns, and other design elements. Further, the bracelet is a fashionable, wearable product that can operate independently from a smartphone or mobile device. Accordingly, the smart bracelet can be a beautiful cuff bracelet that is always connected, cellular based and, has been designed to blend in with any outfit and other accessory that a woman would wear. Moreover, a smart phone is not the compute and connectivity center for the bracelet, as the bracelet is a fashion-first design that is not tethered to a smart phone. With the cellular connectivity, it is an independent compute product.

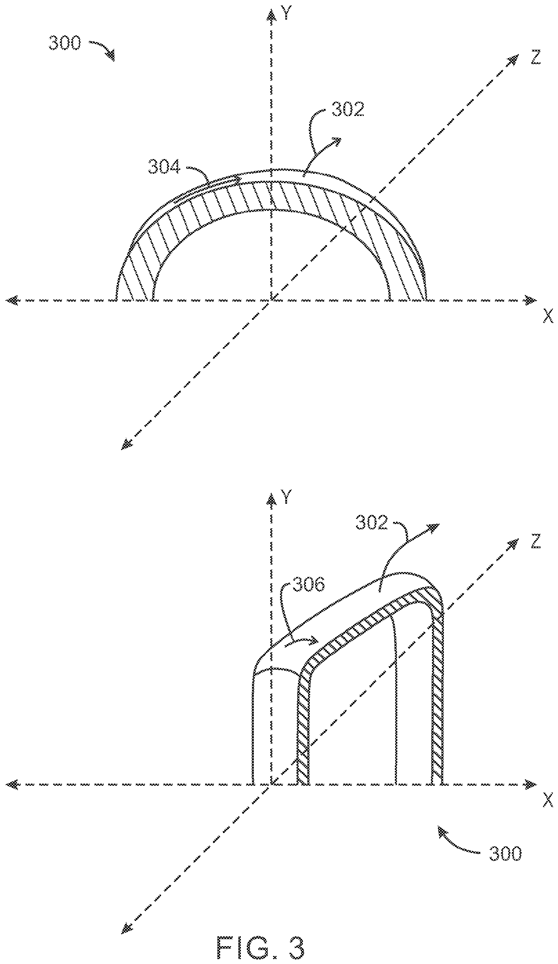

Fig. 3 is an illustration of a portion of a smart bracelet 300. As shown, the bracelet 300 has a curved contour across the bracelet. Specifically, the bracelet 300 is curved on an outer surface 302 along the lines that circle the wrist as the bracelet is worn. A line 304 represents this curved contour on the bracelet 300. The bracelet 300 also has curved contour lines on the outer surface 302 along lines that are perpendicular to lines that circle the wrist as the bracelet is worn. A line 306 represents this curved contour on the bracelet 300. Accordingly, the outer surface 302 is a surface with a complex curve. In some cases, a surface with a complex curve is a surface that includes a curved, non-flat surface in a plurality of planes and the curved non-flat planes are smoothly blended into conformity with one another such that the surface has a smooth, eye-pleasing appearance. Although a bracelet is described herein, a surface with a complex curve may be used in any number of form factors. For example, a surface with a complex curve may be used on display screens, televisions, mobile devices and the like.

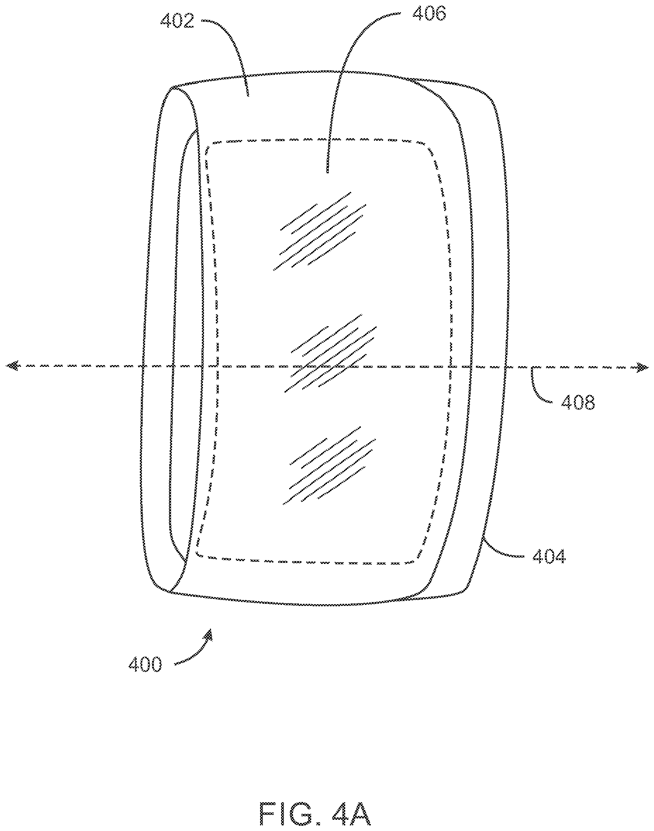

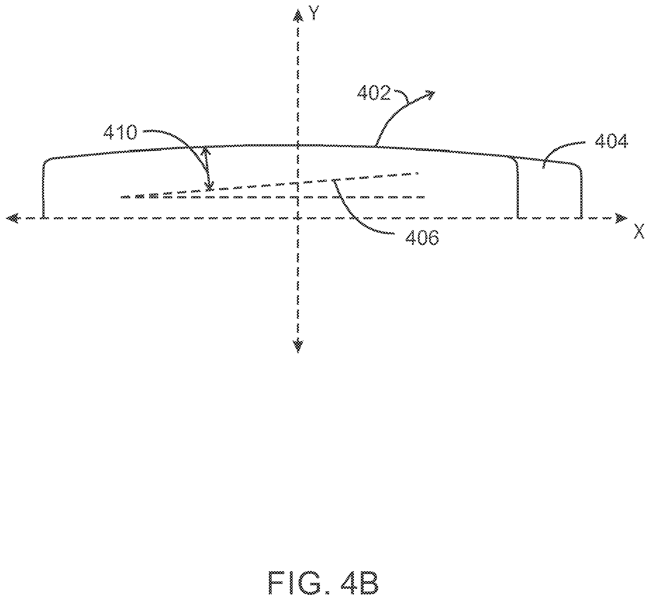

Fig. 4A is a top view of a bracelet housing 400. The bracelet housing 400 includes an outer surface 402 with a complex curve. The bracelet housing 400 is coupled with an accent piece 404, and also includes a display 406. The display 406 is disposed beneath the outer surface 402 of the bracelet. A line 408 indicates the direction of a cross section, illustrated in Fig. 4B. The outer surface of the bracelet 402 includes a curve along the line 408. However, the display does not curve along the line 408. Rather, the display 406 curves in a direction perpendicular to the line 408.

Fig. 4B is a cross section of the bracelet housing 400. The outer surface 402 is a smooth portion of the bracelet housing 400 coupled with the accent piece 404. In some cases, the outer surface 402 is a separate portion of the bracelet housing 400 covering the display 406. The outer surface 402 is a surface with a complex curve. In some cases, the outer surface is a surface with a double contour. As used herein, a double contour is a complex curve in two planes. For example, the outer surface 402 of the bracelet housing 400 curves across the wrist of a user, as well as from the hand to the arm of the user. The display 406 is positioned below the double contoured outer surface 402.The display is not a double contoured display. Rather, the display may curve along a first axis while being flat along a second axis that is perpendicular to the first axis.

The display 406 is located is a recessed area below the outer surface 402. The recessed area may be oriented such that the display 406 can be tilted underneath the outer surface 402 when mounted in the recessed area. In some cases, the direction of tilt of the display 406 is away from the accent piece 404. By tilting the display, an area 410 of substantially uniform thickness of the bracelet housing 400 is created above the display. In other words, a portion of the bracelet housing 400 is of a substantially uniform thickness from the outer surface 402 to a surface of the display 406 along one dimension of the display. In embodiments, a portion of the bracelet housing 400 is of substantially uniform thickness from the outer surface 402 to the display 406 from the hand to forearm as the bracelet is worn. Additionally, a portion of the bracelet housing 400 is of substantially symmetrical thickness from the outer surface 402 to the display 406 around the wrist as the bracelet is worn.

While the outer surface 402 has both curves of the double contoured surface, an inner, recessed surface of the housing curves in one direction, around the wrist. Accordingly, the recess has a simple curve in one direction. The inner surface maintains a flat surface along lines perpendicular to the curve around the wrist as the bracelet is worn. In embodiments, the display is mounted or in contact with the inner recessed surface. As a result, the display 406 and any other associated materials, such as a touch screen, that curve in a single direction can be mounted on or in contact with the recessed surface of the housing 400. Tilting display disposed within the housing enables the display 406 and any other associated materials, such as a touch screen, to be placed in an area 410 of substantially uniform thickness of the bracelet housing 400. The display includes a curve along one axis and is positioned within the housing so that there is a substantially uniform distance between the outer surface of the housing and a surface of the display along one dimension of the display. Further, inner recessed surface of the housing enables the display to be tilted at a degree of tilt that is based on the amount of curvature of the outer surface of the bracelet.

By separating the outer surface 402 contours from the recessed display mounting surface contours, displays that cannot be used in form factors with complex curves may be used in the smart bracelet. For example, even though the outer surface 402 of the bracelet curves both around the wrist and from the hand to the arm, a second and internal recessed surface is created for the display that only curves around the wrist but is flat from the hand to forearm to the arm. This allows the use of thin displays that can curve in one direction to be used in more complex form factors than would otherwise be possible.

In examples, the display is not perfectly centered under the curve of the bracelet housing 400, as the curve of the bracelet housing 400 is completed by the accent piece. Put another way, the bracelet housing forms a portion of a bracelet contour from hand to forearm, and the accent piece completes the contour from hand to forearm. As a result of the display not being centered underneath the complex curve created when the bracelet housing the accent piece are joined together, the complex curve of the bracelet housing 400 without the accent piece can create both a non-uniform and non-symmetrical depth from the outer surface to the display and touch panel. This is not ideal for the feel of the user, function of the touch panel or visual aesthetics of the product when looking at the display. These problems are addressed by tilting the internal, recessed surface by substantially 2.5 degrees away from the accent piece - creating a symmetrical surface depth for the display and touch panel. In some cases, the degree of tilt of the internal recessed surface is dependent on the amount of curvature in the outer surface of the bracelet.

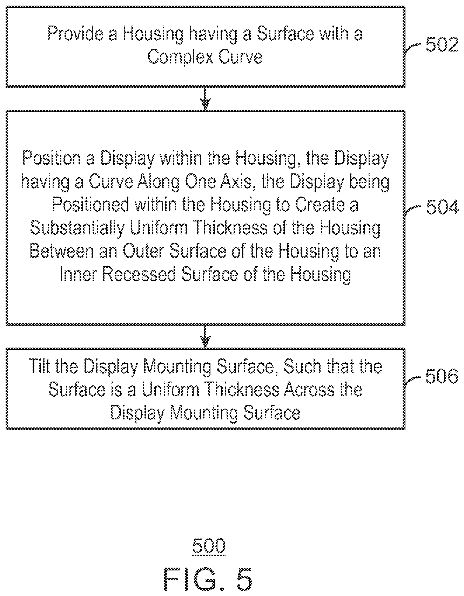

Fig. 5 is a process flow diagram of a method 500 for constructing an electronic device. At block 502, a housing having a surface with a complex curve is provided. At block 504, a display is positioned within the housing. The display has a curve along one axis, and is positioned within the housing to create a substantially uniform thickness of the housing between an outer surface of the housing to an inner recessed surface of the housing.

The smart bracelet provides a stylish, fashionable designed electronic device with a size appropriate for female consumers. Moreover, the bracelet enables greater use due to being a standalone device. The smart bracelet enables a consumer to stay connected in a more natural manner than using her phone and/or without her phone necessarily present.

### EXAMPLE 1

An electronic device is described herein. The electronic device includes a housing that has an outer surface with a complex curve and a display. The display is disposed within the housing. Additionally, the display has a curve along one axis, the display being positioned within the housing so that there is a substantially uniform distance between the outer surface of the housing and a surface of the display along one dimension of the display.

The electronic device may include a wireless receiver, and the display may be visible through the outer surface of the housing. The curve along one axis of the display may be aligned with a first curve of the complex curve of the housing. Additionally, a processor may control the operation of the display. The housing may contain an opening through which the display is viewed, the display being positioned so that it does not extend through the surface with the complex curve. Further, a cover may be disposed over the display. The electronic device may be a bracelet, and the display may be a touch screen. An accent piece may be attached to the housing. Further, an insert piece may be disposed within the housing to change a dimension of the electronic device. The display may curve in a first direction while maintaining a generally flat surface in a second direction, where the second direction is perpendicular to the first curve. Further, the display may be tilted at substantially 2.5 degrees.

### EXAMPLE 2

A bracelet is described herein. The bracelet includes a housing and a display. The housing that has an outer surface with a complex curve. The display is disposed within the housing, and the display has a curve along one axis. The display is positioned within the housing so that there is a substantially uniform distance between the outer surface of the housing and a surface of the display along one dimension of the display. The bracelet also includes a receiver, a memory and a processor. The memory is to store instructions and is communicatively coupled to the display. The processor is communicatively coupled to the receiver and the memory. When the processor is to execute the instructions, the processor is to process data from the receiver and provide real-time information on the display based on the data from the receiver.

The bracelet may be coupled with an accent piece. The bracelet can be coupled with an insert piece, and the insert piece is used to adjust the size of the bracelet. The bracelet can include sensors to detect if the bracelet is open or closed. Further, the bracelet can include a hinge that enables portions of the housing to rotate about the hinge.

### EXAMPLE 3

A method of constructing an electronic device is described herein. The method includes providing a housing having an outer surface with a complex curve. The method also includes positioning a display within the housing, the display having a curve along one axis, the display being positioned within the housing so that there is a substantially uniform distance between the outer surface of the housing and a surface of the display along one dimension of the display.

The display may be mounted to an inner recessed surface of the housing. Additionally, the display may comprise a touch screen. An inner recessed surface of the housing may curve in first direction while maintaining a flat surface in a second direction, where the second direction is perpendicular to the first direction. Further, the inner recessed surface of the housing may enable the display to be tilted at substantially 2.5 degrees.

It is to be understood that specifics in the aforementioned examples may be used anywhere in one or more embodiments. For instance, all optional features of the electronic device described above may also be implemented with respect to either of the methods or the computer-readable medium described herein. Furthermore, although flow diagrams and/or state diagrams may have been used herein to describe embodiments, the present techniques are not limited to those diagrams or to corresponding descriptions herein. For example, flow need not move through each illustrated box or state or in exactly the same order as illustrated and described herein.

The present techniques are not restricted to the particular details listed herein. Indeed, those skilled in the art having the benefit of this disclosure will appreciate that many other variations from the foregoing description and drawings may be made within the scope of the present techniques. Accordingly, it is the following claims including any amendments thereto that define the scope of the present techniques.

## Claims

1. An electronic device (100), comprising:
a housing (200) that has an outer surface that is curved along at least a first axis and a second axis, and a recess below the outer surface that is curved along the first axis and that it is not curved along the second axis; and
a display (120) disposed within the housing underneath of the outer surface, the display having a curve along the first axis, the display being positioned within the housing so that there is a substantially uniform distance between the outer surface of the housing and a surface of the display along one dimension of the display.

2. The electronic device (100) of claim 1, comprising a wireless receiver.

3. The electronic device (100) of claim 1 or 2, wherein the display (120) is visible through the outer surface of the housing (200).

4. The electronic device (100) of any of the preceding claims, wherein the curve along one axis of the display is aligned with a first curve of the outer surface of the housing (200).

5. The electronic device (100) of any of the preceding claims, comprising a processor to control the operation of the display.

6. The electronic device (100) of any of the preceding claims, wherein the housing (200) contains an opening beyond which the display (120) is viewed, the display being positioned so that it does not extend through the outer surface.

7. A bracelet, comprising:
the electronic device (100) of claim 1;
a memory (104) that is to store instructions and that is communicatively coupled to the display; and
a processor (102) communicatively coupled to the receiver and the memory, wherein when the processor is to execute the instructions, the processor is to:
process data from the receiver; and
provide real-time information on the display based on the data from the receiver.

8. The bracelet of claim 7, wherein the bracelet is coupled with an accent piece forming a portion of a contour of the housing.

9. The bracelet of claim 7 or 8, wherein the bracelet is coupled with an insert piece, and the insert piece is used to adjust the size of the bracelet.

10. A method of constructing an electronic device, comprising:
providing (502) a housing having an outer surface that is curved along at least a first axis and a second axis, and a recess below the outer surface that is curved along the first axis and that it is not curved along the second axis; and
positioning (504) a display within the housing underneath of the outer surface, the display having a curve along the first axis, the display being positioned within the housing so that there is a substantially uniform distance between the outer surface of the housing and a surface of the display along one dimension of the display.

11. The method of claim 10, wherein the display is mounted to an inner recessed surface of the housing.

12. The method of claim 10 or 11, wherein the display comprises a touch screen.

13. A wearable apparatus, comprising:
the electronic device (100) of claim 1; and
a means to position the display within the housing.

14. The wearable apparatus of claim 13, comprising a means to receive data.

15. The wearable apparatus of claim 13 or 14, wherein the display is visible through the outer surface of the housing.

## Patentansprüche

1. Elektronische Vorrichtung (100), umfassend:
ein Gehäuse (200), das aufweist: eine Außenfläche, die entlang mindestens einer ersten Achse und einer zweiten Achse gekrümmt ist; und eine Vertiefung unter der Außenfläche, die entlang der ersten Achse gekrümmt ist und die entlang der zweiten Achse nicht gekrümmt ist; und
ein Anzeige (120), die innerhalb des Gehäuses unterhalb der Außenfläche angeordnet sind, wobei die Anzeige eine Krümmung entlang der ersten Achse aufweist, wobei die Anzeige innerhalb des Gehäuses so angebracht ist, dass ein im Wesentlichen gleichmäßiger Abstand zwischen der Außenfläche des Gehäuses und einer Oberfläche der Anzeige entlang einer Dimension der Anzeige besteht.

2. Elektronische Vorrichtung (100) nach Anspruch 1, die einen drahtlosen Empfänger umfasst.

3. Elektronische Vorrichtung (100) nach Anspruch 1 oder 2, wobei die Anzeige (120) durch die Außenfläche des Gehäuses (200) sichtbar ist.

4. Elektronische Vorrichtung (100) nach einem der vorhergehenden Ansprüche, wobei die Krümmung entlang einer Achse der Anzeige an eine erste Krümmung der Außenfläche des Gehäuses (200) angeglichen ist.

5. Elektronische Vorrichtung (100) nach einem der vorhergehenden Ansprüche, die einen Prozessor umfasst, um den Betrieb der Anzeige zu steuern.

6. Elektronische Vorrichtung (100) nach einem der vorhergehenden Ansprüche, wobei das Gehäuse (200) eine Öffnung enthält, hinter der Anzeige (120) zu sehen ist, wobei die Anzeige so angebracht ist, dass sie sich nicht durch die Außenfläche erstreckt.

7. Armband umfassend:
die elektronische Vorrichtung (100) nach Anspruch 1;
einen Speicher (104), der dazu dient, Befehle zu speichern, und der für eine Kommunikation mit der Anzeige verbunden ist; und
einen Prozessor (102), der für eine Kommunikation mit dem Empfänger und dem Speicher verbunden ist, wobei, wenn der Prozessor die Befehle ausführt, der Prozessor geeignet ist zum:
Verarbeiten der Daten von dem Empfänger; und
Bereitstellen von Echtzeitinformationen auf der Anzeige aufgrund der Daten von dem Empfänger.

8. Armband nach Anspruch 7, wobei das Armband mit einem dekorativen Bauteil verbunden ist, das einen Teil eines Umfangs des Gehäuses bildet.

9. Armband nach Anspruch 7 oder 8, wobei das Armband mit einem Einsatzbauteil verbunden ist und wobei das Einsatzbauteil verwendet wird, um die Größe des Armbands anzupassen.

10. Verfahren zum Herstellen einer elektronischen Vorrichtung, umfassend:
Bereitstellen (502) eines Gehäuses, das eine Außenfläche, die entlang mindestens einer ersten Achse und einer zweiten Achse gekrümmt ist, und eine Vertiefung unter der Außenfläche aufweist, die entlang der ersten Achse gekrümmt ist und die entlang der zweiten Achse nicht gekrümmt ist; und
Anbringen (504) einer Anzeige innerhalb des Gehäuses unterhalb der Außenfläche, wobei die Anzeige eine Krümmung entlang der ersten Achse aufweist, wobei die Anzeige innerhalb des Gehäuses so angebracht ist, dass ein im Wesentlichen gleichmäßiger Abstand zwischen der Außenfläche des Gehäuses und einer Oberfläche der Anzeige entlang einer Dimension der Anzeige besteht.

11. Verfahren nach Anspruch 10, wobei die Anzeige auf eine mit Vertiefungen versehenen Innenfläche des Gehäuses montiert ist.

12. Verfahren nach Anspruch 10 oder 11, wobei die Anzeige einen Touchscreen umfasst.

13. Tragbares Gerät, umfassend:
die elektronische Vorrichtung (100) nach Anspruch 1; und
ein Element, um die Anzeige innerhalb des Gehäuses anzubringen.

14. Tragbares Gerät nach Anspruch 13, das ein Element umfasst, um Daten zu empfangen.

15. Tragbares Gerät nach Anspruch 13 oder 14, wobei die Anzeige durch die Außenfläche des Gehäuses sichtbar ist.

## Revendications

1. Dispositif électronique (100), comprenant :
un boîtier (200) qui a une surface externe qui est courbée au moins le long d'un premier axe et d'un deuxième axe, et une encoche sous la surface externe qui est courbée le long du premier axe et qui n'est pas courbée le long du deuxième axe ; et
un écran (120) disposé à l'intérieur du boîtier au-dessous de la surface externe, l'écran ayant une courbe le long du premier axe, l'écran étant positionné à l'intérieur du boîtier de telle sorte qu'il y a une distance sensiblement uniforme entre la surface externe du boîtier et une surface de l'écran le long d'une dimension de l'écran.

2. Dispositif électronique (100) de la revendication 1, comprenant un récepteur sans fil.

3. Dispositif électronique (100) de la revendication 1 ou 2, dans lequel l'écran (120) est visible à travers la surface externe du boîtier (200).

4. Dispositif électronique (100) de l'une quelconque des revendications précédentes, dans lequel la courbe le long d'un axe de l'écran est alignée avec une première courbe de la surface externe du boîtier (200).

5. Dispositif électronique (100) de l'une quelconque des revendications précédentes, comprenant un processeur pour contrôler le fonctionnement de l'écran.

6. Dispositif électronique (100) de l'une quelconque des revendications précédentes, dans lequel le boîtier (200) contient une ouverture au-delà de laquelle l'écran (120) est vu, l'écran étant positionné de telle sorte qu'il ne s'étend pas à travers la surface externe.

7. Bracelet, comprenant :
le dispositif électronique (100) de la revendication 1 ;
une mémoire (104) qui doit stocker des instructions et qui est couplée de façon communicante à l'écran ; et
un processeur (102) couplé de façon communicante au récepteur et à la mémoire,
dans lequel, quand le processeur doit exécuter les instructions, le processeur doit :
traiter des données provenant du récepteur ; et
fournir des informations en temps réel sur l'écran sur la base des données provenant du récepteur.

8. Bracelet de la revendication 7, le bracelet étant couplé à une pièce d'ornement formant une partie d'un contour du boîtier.

9. Bracelet de la revendication 7 ou 8, le bracelet étant couplé à une pièce rapportée, et la pièce rapportée étant utilisée pour régler la taille du bracelet.

10. Procédé de construction d'un dispositif électronique, comprenant :
l'obtention (502) d'un boîtier ayant une surface externe qui est courbée au moins le long d'un premier axe et d'un deuxième axe, et une encoche sous la surface externe qui est courbée le long du premier axe et qui n'est pas courbée le long du deuxième axe ; et
le positionnement (504) d'un écran à l'intérieur du boîtier au-dessous de la surface externe, l'écran ayant une courbe le long du premier axe, l'écran étant positionné à l'intérieur du boîtier de telle sorte qu'il y a une distance sensiblement uniforme entre la surface externe du boîtier et une surface de l'écran le long d'une dimension de l'écran.

11. Procédé de la revendication 10, dans lequel l'écran est monté sur une surface en retrait interne du boîtier.

12. Procédé de la revendication 10 ou 11, dans lequel l'écran comprend un écran tactile.

13. Appareil portable, comprenant :
le dispositif électronique (100) de la revendication 1 ; et
un moyen pour positionner l'écran à l'intérieur du boîtier.

14. Appareil portable de la revendication 13, comprenant un moyen pour recevoir des données.

15. Appareil portable de la revendication 13 ou 14, dans lequel l'écran est visible à travers la surface externe du boîtier.
